# EUROPEAN PATENT SPECIFICATION

(11) **EP 1 608 879 B1**
(45) Date of publication and mention of the grant of the patent: **12.12.2007**
(21) Application number: 04702881.6
(22) Date of filing: 16.01.2004
(51) Int. Cl.: F16B 35/04, F16B 39/00, F16B 41/00

(54) **A FASTENING**
BEFESTIGUNGSMITTEL
PIECE D'ATTACHE

(30) Priority: 02.04.2003 GB 0307644
(43) Date of publication of application: 28.12.2005
(73) Proprietor: AUTOLIV DEVELOPMENT AB, 447 83 Vargarda (SE)
(72) Inventor: JACONELLI, Hakan, S-441 39 Alingsas (SE); MALMENSTAM, Jonas, S-441 42 Alingsas (SE)
(74) Representative: Müller, Karl-Ernst
(86) International application number: PCT/SE2004/000044
(87) International publication number: WO 2004/088153

(56) References cited:
- DE-A1- 10 042 307
- GB-A- 1 062 372
- GB-A- 1 204 853
- US-A- 5 967 725

## Description

The present invention relates to a fastening which may be useful in securing in a position, within a vehicle, an air-bag of the "inflatable curtain" type. In detail the invention relates to a fastening, the fastening comprising a bolt, the bolt having a head and a threaded shank extending from the head, the bolt being screwable with its threaded shank into a threaded bore and the free end of the threaded shank remote from the head being provided with an end cap, the end cap having a yieldable formation to engage frictionally with the threaded bore and the shank of the bolt continuing into an axially extending projection for receiving the end cap, the end cap being consisting of a cylindrical body portion received by the projection.

A fastening having the afore-mentioned features is known from the US - A - 5 967 725. In order to achieve a self-holding of the bolt in the threaded bore as a kind or preassembly during mounting of the bolt within one embodiment of the known fastening an end cap is attachable to a projection forming a prolongation of the bolt. On the outer periphery of the bolt three barb-like hooks are arranged which are yieldable in the direction of inserting the bolt into the threaded bore. The known fastening insofar has the disadvantage that the barbs after insertion of the bolt are fitting closely to the inner thread of the threaded bore during screwing-in of the bolt so that the frictional resistance is enlarged during the screwing movement of the bolt.

As far as another fastening is known from GB- A -1 204 853 an end cap consisting of wax is fitted on the end of the threaded shank of the bolt. In this case the same disadvantages will occur as described above.

Also at the fastening known from DE 100 42 307 A1 an annular body is moulded upon the thread of the threaded shank of the bolt which shall serve as a securing against loss of a component to be held thereon.

It is therefore an object of this invention to design a fastening in accordance with the features of the preamble of claim 1 such that the fastening together with the end cap being arranged thereon can be preassembled with the threaded bore whereas the end cap shall disturb the final mounting of the bolt at a minimum only.

The invention relates to the solution that the body portion of the end cap is provided along its length with a plurality of radially outwardly extending flanges being spaced from each other. Herewith the advantages are given that the flanges have only small contact faces at their outer periphery so that only small frictional forces will occur. Furtheron the flanges being spaced from each other may swerve in an axial direction during insertion of the bolt into the threaded bore as well as during the final mounting so that also by this effect the resistance forces against insertion as well as against screwing of the bolt are minimized.

The invention may be used in an advantageous manner for securing in position of an air-bag of the "inflatable curtain" type. A conventional inflatable curtain air-bag, when initially provided, is contained within a long package, with a plurality of mounting lugs extending from the package. Each mounting lug is to be secured to an appropriate mount provided within a motor vehicle. If each mount is in the form of a threaded hole with is to receive a bolt passing through the lug, it is often difficult for the package to be held in position whilst the bolts are introduced through the lugs and engaged with the threaded bores. In this respect the preassembly as given by the realisation of the invention will be useful.

Preferably the flanges are distributed evenly along the length of the cylindrical body portion of the end cap.

Advantageously, the outer diameter of the flanges is at least the same as the outer diameter of the threaded shank of the bolt. Conveniently, at least some of the flanges have a diameter greater than the diameter of the threaded shank of the bolt.

Preferably a terminal flange has a diameter less than of succeeding flanges. Advantageously, at least some of the flanges have chamfered leading edges. Conveniently, at least some of the flanges are segmente. Preferably, the end cap is a separate component which is secured to the bolt.

Advantageously, the end cap is rotatably mounted on the bolt. Conveniently, the axially extending projection having an enlarged head at its end, the cap having an internal bore dimensioned to receive the projection and head.

In order that the invention may be more readily understood, and so that further features thereof may be appreciated, the invention will be described, by way of example, with reference to the accompanying drawings in which:
FIGURE 1 is a diagrammatic side of an air-bag in the form of a so-called "inflatable curtain" when in the inflated condition;
FIGURE 2 is an enlarged view of an upper part of the inflatable curtain;
FIGURE 3 is a side view of a bolt forming part of the fastening in accordance with the present invention;
FIGURE 4 is a side view of an end cap to be mounted in the bolt of Figure 3;
FIGURE 5 is a perspective view of the end cap; and
FIGURE 6 is an enlarged partially broken away side view of the end cap.

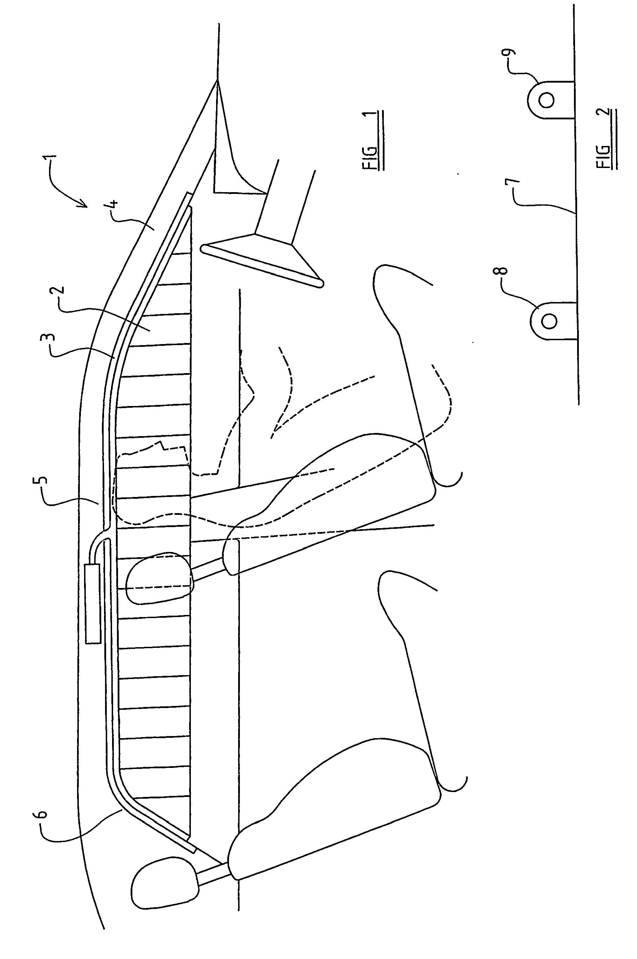

Referring initially to Figure 1 of the accompanying drawings, the cabin of a motor vehicle 1 is illustrated showing, diagrammatically, an air-bag 2 in the form of a "inflatable curtain". The air-bag is divided into a plurality of substantially vertical chambers or cells by seams provided within the air-bag, and the air-bag is dimensioned to be received initially within a channel recess 3 which extends along the A post 4 of the vehicle, along the roof line 5 above the door openings and part way down the C post 6. Air-bags of this type are well known.

Figure 2 illustrates part of the upper edge 7 of an inflatable curtain air-bag, showing that the air-bag is provided with a plurality of spaced apart apertured lugs 8, 9.

When the inflatable curtain is to be mounted in the motor vehicle typically the inflatable curtain 2 is in the form of a package, with the mounting lugs 8, 9, etc. protruding from the package. The mounting lugs are to be aligned with corresponding threaded apertures formed in the A post, roof line, and C post of the vehicle, and bolts are to be passed through the apertures and the apertured lugs to be engaged with the corresponding threaded apertures in the vehicle. It may require considerable manual dexterity for a single operative to hold the repacked air-bag in position and locate the bolts appropriately.

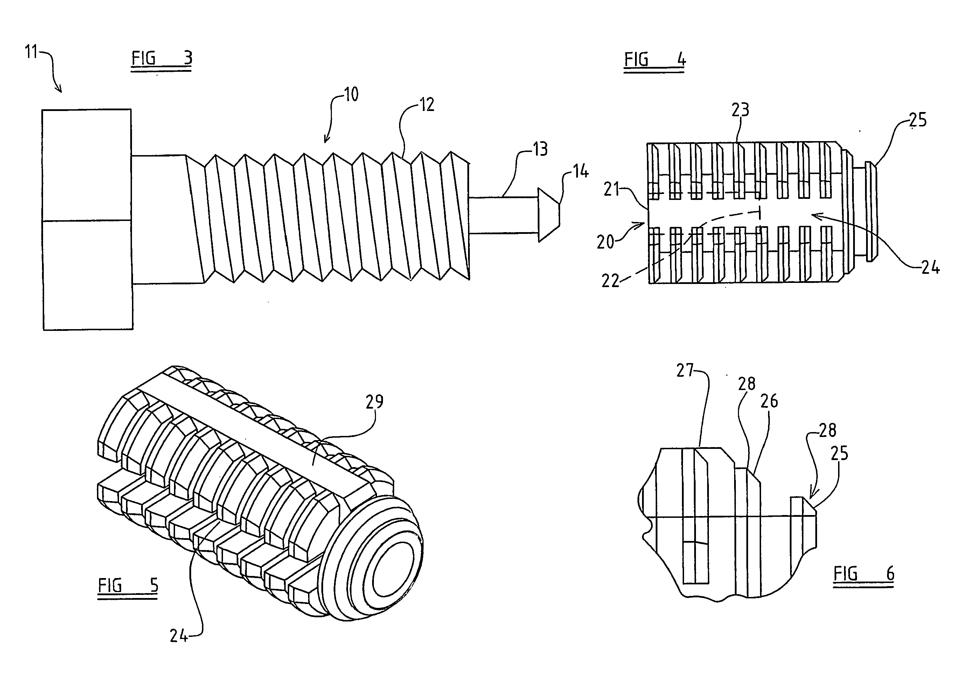

Figures 3-6 illustrate a fastening which may facilitate the task of the operative.

The fastening is in the form of a bolt which is provided, in the described embodiment, with a separate end cap. The end cap has radially outwardly directed flanges adapted to effect a friction fit with a threaded bore dimensioned to receive the threaded part of the bolt.

Thus in using the fastenings, initially each fastening may be swiftly engaged with a threaded aperture simply by inserting the end cap into a threaded aperture to effect a frictional engagement between the end cap and the threaded aperture. Subsequently the bolt may be tightened in the conventional way.

Figure 3 illustrates a metallic bolt 10. The bolt 10 is provided with a conventional hexagonal head 11 and a conventional threaded shank 12. At the free end of the threaded shank 12 there is an axially extending cylindrical projection 13 which terminates with a frustoconical head 14. An end cap is to be received on the projection 13 with its head 14.

Figure 4 illustrates an end cap 20 to be received on the bolt 10. The end cap 20 comprises a main cylindrical body portion 21. The body portion 21 is provided with an axially extending bore 22 dimensioned to receive the projection 13 and the head 14. The end cap 20 may thus be mounted on the bolt 10 in a such a way that the end cap may rotate freely about the axis of the bolt.

The exterior of the cylindrical body 21 is provided with a plurality of radially outwardly directed flanges 23. The flanges 23 are evenly spaced along the length of the body 21. The flanges 23 have an outer diameter which is at least the same as the outer diameter of the threaded shank 12 of the bolt 10, but preferably at least some of the flanges 23 have a diameter greater than the diameter of the threaded shank 12 of the bolt 10.

As can be seen in Figures 4 and 5 at least some of the flanges 23 are segmented, so that each flange is in the form of four equi-angularly spaced separate sectors, the sectors of adjacent flanges being co-aligned to form channels or passages 24 between adjacent sets of sectors of the flanges.

As can be seen more clearly in Figure 6 a terminal flange 25 is of relatively small diameter, the next adjacent flange 26 is of greater diameter and the next adjacent flange 27 is of even greater diameter, the remaining flanges having the same diameter as the flange 27.

It can be seen, from Figure 6, that the forward facing lip of each flange is chamfered at 28 to facilitate the insertion of the end cap 20 into a threaded aperture.

A ridge 29 extends axially passing between adjacent flange sections.

It is to be appreciated that when fastenings of the kind shown in Figures 3-6 are used to secure an inflatable curtain in position, each fastening may relatively easily be passed through an aperture formed in a lug 8,9 provided on the inflatable curtain so that the end cap 20 becomes frictionally engaged within the threaded bore which is provided to received the appropriate bolt. There is no need to ensure that the threading on the bolt 10 is aligned with the threading in the aperture and there is no need to rotate the bolt 10. A simple axial movement of the bolt 10 will force the end cap 20 into the threaded bore. The fact that the terminal flange 25 is of relatively small diameter will make it easy for that flange to become aligned with the bolt 10. The gradual increase in the sizes of the flanges 22 will facilitate the subsequent insertion of the end cap 20 into the threaded bore. The chamfering 28 provided at the leading edge of each flange 22 will facilitate a flexing of each flange 22 as it is inserted into the bore thus ensuring a good frictional grip between the flanges and the bore.

When all of the fastenings have been inserted in position in this way, the frictional grip effected by the fastenings to the threaded bores provided in the motor vehicle will be sufficient to hold the inflatable curtain in position. Using a spanner, and applying further axial pressure, the threaded shank 12 of the bolt of a fastening may then be brought into engagement with the threaded aperture and the bolt may be fastening in the conventional manner.

Whilst one embodiment of a fastening in accordance with the invention has been described, it is to be appreciated that many modifications may be effected. For example, the end cap and the bolt may be formed integrally, being moulded of a single piece of appropriate plastics material. Whilst the end cap has been illustrated as having substantially planar flanges, it is to be appreciated that the flanges may be angled in the form of barbs. Also it is to be appreciated that the end cap may be provided with some other yieldable engagement structure to engage frictionally with the threaded bore. Thus the end cap may be provided with an outer covering of a foam material, for example.

In the present Specification "comprises" means "includes or consists of' and "comprising" means "including or consisting of".

## Claims

1. A fastening, the fastening comprising a bolt (10), the bolt (10) having a head (11) and a threaded shank (12) extending from the head (11), the bolt (10) being screwable with its threaded shank (12) into a threaded bore and the free end of the threaded shank (12) remote from the head (11) being provided with an end cap (20), the end cap (20) having a yieldable formation to engage frictionally with the threaded bore and the shank (12) of the bolt (10) continuing into an axially extending projection (13) for receiving the end cap (20), the end cap (20) being consisting of a cylindrical body portion (21) received by the projection (13), **characterized in that** the body portion (21) of the end cap (20) is provided along its length with a plurality of radially outwardly extending flanges (23) being spaced from each other.

2. A fastening according to claim 1, **characterized in that** the flanges (23) are distributed evenly along the length of the cylindrical body portion (21) of the end cap (20).

3. A fastening according to claim 1 or 2, **characterized in that** the outer diameter of the flanges (23) is at least the same as the outer diameter of the threaded shank (12) of the bolt (10).

4. A fastening according to any one of the claims 1 to 3, **characterized in that** at least some of the flanges (23) have a diameter greater than the diameter of the threaded shank (12) of the bolt (10).

5. A fastening according to any one of claims 1 to 4, **characterized in that** at least a terminal flange (23) has a diameter less than of succeeding flanges (23).

6. A fastening according to any one of the claims 1 to 5, **characterized in that** at least some of the flanges (23) have chamfered leading edges.

7. A fastening according to any one of the claims 1 to 6, **characterized in that** at least some of the flanges (23) are segmented.

8. A fastening according to any one of the claims 1 to 7, **characterized in that** the end cap (20) is a separate component which is secured to the bolt (10).

9. A fastening according to claim 8, **characterized in that** the end cap (20) is rotatably mounted on the bolt (10).

10. A fastening according to claim 9, **characterized in that** the axially extending projection (13) having an enlarged head (14) at its end, the cap (20) having an internal bore (22) dimensioned to receive the projection (13) and head (14).

## Patentansprüche

1. Befestigungsmittel mit einer einen Kopf (11) und einen sich von dem Kopf (11) wegerstreckenden Gewindeschaft (12) umfassenden Schraube (10), wobei die Schraube (10) mit ihrem Gewindeschaft (12) in eine Gewindebohrung einschraubbar ist und an dem freien Ende des Gewindeschaftes (12), von dem Kopf (11) entfernt liegend, eine Endkappe (20) vorgesehen ist, wobei die Endkappe (20) eine nachgiebige Ausgestaltung hat, um in Reibeingriff mit der Gewindebohrung zu gelangen, und wobei der Schaft (12) der Schraube (10) sich in einen axial wegerstreckenden Vorsprung (13) zur Aufnahme der Endkappe (20) fortsetzt und die Endkappe (20) aus einem von dem Vorsprung (13) aufgenommenen zylindrischen Körper (21) besteht, **dadurch gekennzeichnet, dass** der Körper (21) der Endkappe (20) über seine Länge mit einer Mehrzahl von radial nach außen gerichteten und voneinander beabstandet angeordneten Flanschen (23) versehen ist.

2. Befestigungsmittel nach Anspruch 1, **dadurch gekennzeichnet, dass** die Flansche (23) gleichmäßig über die Länge des zylindrischen Körpers (21) der Endkappe (20) verteilt angeordnet sind.

3. Befestigungsmittel nach Anspruch 1 oder 2, **dadurch gekennzeichnet, dass** der Außendurchmesser der Flanschen (23) mindestens so groß ist wie der Außendurchmesser des Gewindeschaftes (12) der Schraube (10).

4. Befestigungsmittel nach einem der Ansprüche 1 bis 3, **dadurch gekennzeichnet, dass** mindestens einige der Flansche (23) einen Durchmesser aufweisen, der größer als der Durchmesser des Gewindeschafts (12) der Schraube (10) ist.

5. Befestigungsmittel nach einem der Ansprüche 1 bis 4, **dadurch gekennzeichnet, dass** mindestens ein Endflansch (23) einen Durchmesser aufweist, der kleiner als jener von nachfolgenden Flanschen (23) ist.

6. Befestigungsmittel nach einem der Ansprüche 1 bis 5, **dadurch gekennzeichnet, dass** mindestens einige der Flansche (23) abgefaste Vorderkanten aufweisen.

7. Befestigungsmittel nach einem der Ansprüche 1 bis 6, **dadurch gekennzeichnet, dass** mindestens einige der Flansche (23) segmentiert sind.

8. Befestigungsmittel nach einem der Ansprüche 1 bis 7, **dadurch gekennzeichnet, dass** die Endkappe (20) eine getrennte Komponente ist, die an der Schraube (10) befestigt ist.

9. Befestigungsmittel nach Anspruch 8, **dadurch gekennzeichnet, dass** die Endkappe (20) drehbar an der Schraube (10) angebracht ist.

10. Befestigungsmittel nach Anspruch 9, **dadurch gekennzeichnet, dass** der sich axial erstreckende Vorsprung (13) an seinem Ende einen vergrößerten Kopf (14) aufweist und die Endkappe (20) eine innere Bohrung (22) aufweist, die zur Aufnahme des Vorsprunges (13) und des Kopfes (14) dimensioniert ist.

## Revendications

1. Pièce d'attache, la pièce d'attache comprenant un boulon (10), le boulon (10) ayant une tête (11) et une tige filetée (12) s'étendant à partir de la tête (11), le boulon (10) pouvant se visser avec la tige filetée (12) dans un alésage fileté et l'extrémité libre de la tige filetée (12) à distance de la tête (11) étant dotée d'un capuchon d'extrémité (20), le capuchon d'extrémité (20) ayant une constitution déformable pour se mettre en prise par frottement avec l'alésage fileté et la tige (12) du boulon (10) continuant dans une saillie (13) s'étendant de manière axiale pour recevoir le capuchon d'extrémité (20), le capuchon d'extrémité (20) se composant d'une partie de corps cylindrique (21) reçue par la saillie (13), **caractérisée en ce que** la partie de corps (21) du capuchon d'extrémité (20) est prévue le long de sa longueur, avec une pluralité de rebords (23) s'étendant radialement vers l'extérieur, qui sont espacés les uns des autres.

2. Pièce d'attache selon la revendication 1, **caractérisée en ce que** les rebords (23) sont repartis régulièrement le long de la longueur de la partie de corps cylindrique (21) du capuchon d'extrémité (20).

3. Pièce d'attache selon la revendication 1 ou 2, **caractérisée en ce que** le diamètre externe des rebords (23) est au moins le même que le diamètre externe de la tige filetée (12) du boulon (10).

4. Pièce d'attache selon l'une quelconque des revendications 1 à 3, **caractérisée en ce qu'**au moins certains des rebords (23) ont un diamètre supérieur au diamètre de la tige filetée (12) du boulon (10).

5. Pièce d'attache selon l'une quelconque des revendications 1 à 4, **caractérisée en ce qu'**au moins un rebord terminal (23) a un diamètre inférieur à celui des rebords successifs (23).

6. Pièce d'atache selon l'une quelconque des revendications 1 à 5, **caractérisée en ce qu'**au moins certains des rebords (23) ont des bords d'attaque chanfreinés.

7. Pièce d'attache selon l'une quelconque des revendications 1 à 6, **caractérisée en ce qu'**au moins certains des rebords (23) sont segmentés.

8. Pièce d'attache selon l'une quelconque des revendications 1 à 7, **caractérisée en ce que** le capuchon d'extrémité (20) est un composant séparé qui est fixé sur le boulon (10).

9. Pièce d'attache selon la revendication 8, **caractérisée en ce que** le capuchon d'extrémité (20) est monté de manière rotative sur le boulon (10).

10. Pièce d'attache selon la revendication 9, **caractérisée en ce que** la saillie (13) s'étendant de manière axiale a une tête agrandie (14) au niveau de son extrémité, le capuchon (20) ayant un alésage interne (22) dimensionné pour recevoir la saillie (13) et la tête (14).
